# EUROPÄISCHE PATENTSCHRIFT

(11) **EP 1 204 826 B1**
(45) Veröffentlichungstag und Bekanntmachung des Hinweises auf die Patenterteilung: **28.04.2004**
(21) Anmeldenummer: 00951383.9
(22) Anmeldetag: 14.07.2000
(51) Int. Cl.: F16C 39/06

(54) **SELBSTZENTRIERENDES MAGNETLAGER SOWIE DAMIT AUSGERÜSTETER POSITIONIER UND FÖRDERTISCH**
SELF-CENTRING MAGNETIC BEARING AND POSITIONING AND CONVEYING TABLE EQUIPPED WITH THE SAME
PALIER MAGNETIQUE A CENTRAGE AUTOMATIQUE ET TABLE DE POSITIONNEMENT ET DE TRANSPORT EQUIPEE DE CE PALIER

(30) Priorität: 15.08.1999 DE 19937882; 15.08.1999 DE 19937880
(43) Veröffentlichungstag der Anmeldung: 15.05.2002
(73) Patentinhaber: Löffler, Hans-Peter, 64342 Seeheim-Jugenheim (DE)
(72) Erfinder: Löffler, Hans-Peter, 64342 Seeheim-Jugenheim (DE)
(74) Vertreter: Mierswa, Klaus
(86) Internationale Anmeldenummer: PCT/EP2000/006725
(87) Internationale Veröffentlichungsnummer: WO 2001/013002

(56) Entgegenhaltungen:
- DE-A- 1 938 112
- DE-A- 3 831 736
- DE-A- 3 843 125
- DE-A- 19 712 711
- US-A- 5 686 772

## Beschreibung

Die Erfindung betrifft ein selbstzentrierendes Magnetlager sowie einen damit ausgerüsteten Positionier- und Fördertisch.

### Stand der Technik:

Bekannte Lösungen von Lagerungen in einer Ebene werden durch Kombination von eindimensionalen Lagerungen realisiert. Zum Beispiel werden zwei um 90 Grad zueinander montierte Linearlager mit einem Drehtisch kombiniert. Derartige Tische erfordern einen hohen technischen Aufwand, um vorhandenes Lagerspiel zu minimieren und besitzen eine relativ große zu bewegende Eigenmasse, die schnelle Bewegungsabläufe, wie zum Beispiel Schwingungen, kaum zulassen. Eine weitere Möglichkeit besteht darin, eine Lagerung mittels Federelementen vorzunehmen.

Des Weiteren existieren Piezoversteller, die zwar eine gute Positioniergenauigkeit und Steifigkeit erreichen, jedoch nur über geringe Verstellwege und Geschwindigkeiten verfügen und sehr empfindlich gegen Überlast sind.

Der Erfindung liegt die Aufgabe zu Grunde, eine Lagerung bzw. ein Lager zu schaffen, welches die Lagerung eines Körpers derart gestattet, dass derselbe eine Bewegung in den drei Freiheitsgraden, Längsachse, Querachse und Drehung, ausführen kann, und nach Auslenkung des Körpers eine Rückkehr in die Anfangsposition selbstständig durch Rückstellkräfte des Lagers erfolgen kann. Des Weiteren soll der Aufbau des Lagers kompakt, wartungsarm und verschleißresistent sein.

Die Lösung der Aufgabe besteht in einem selbstzentrierenden Magnetlager, welches aus wenigstens einem Magneten mit wenigstens einer Lagerfläche besteht, aus der ein Magnetfeld austritt oder in die ein solches eintritt, und auf der sich eine magnetisch leitfähige Kugel im Bereich des Magnetfeldes frei beweglich befindet, welches bestrebt ist, die Kugel in das Zentrum der Kraftlinien auf der Lagerfläche in einer Ruhelage zu zentrieren und Magnet und Kugel eine magnetisch-kraftschlüssige Verbindung bilden, wobei der Magnet bei Auslenkung der Kugel aus der Ruhelage bestrebt ist, die Kugel ins Zentrum der Kraftlinien des Magnetfeldes zurückzurollen. Vorzugsweise ist auch das Gegenlager der Kugel ebenfalls ein Magnet mit einer Gegenlagerfläche, aus der ein Magnetfeld austritt oder in die ein solches eintritt, wobei die Magnete so gepolt sind, dass sie sich anziehen und beide Magnete bei Auslenkung der Kugel aus der Ruhelage bestrebt sind, die dazwischen befindliche Kugel in das jeweilige Zentrum der Kraftlinien der Magnetfelder auf der Lagerfläche und der Gegenlagerfläche zurückzurollen, so dass beide Magnete mit der dazwischen angeordneten Kugel eine magnetisch-kraftschlüssige Verbindung bilden.

Die Erfindung besitzt den Vorteil, dass es eine Lagerung eines Körpers derart gestattet, dass derselbe eine Bewegung in den drei Freiheitsgraden, Längsachse, Querachse und Drehung, ausführen kann, und nach Auslenkung des Körpers eine Rückkehr in die Anfangsposition selbstständig durch die magnetischen Rückstellkräfte des Lagers erfolgt. Überschreitet eine in 90 Grad zur Bewegungsebene und entgegen der Anziehungskräfte des oder der magnetischen Lager gerichtete Kraft die Haltekräfte des oder der Magneten, so ist vorteilhaft eine zerstörungsfreie Trennung des oder der Lager mit der Möglichkeit der späteren Rekombination möglich.

Grundelement der Erfindung ist ein Einzellager, gebildet durch wenigstens einen Magneten sowie eine magnetisch leitfähige Kugel oder gebildet durch zwei Magneten, die sich gegenseitig anziehen, zwischen denen eine magnetisch leitfähige Kugel, vorzugsweise aus weichmagnetischem Metall, sich befindet. In beiden fällen bilden die Kombination Magnet-Kugel oder Magnet-Kugel-Magnet einen magnetisch-kraftschlüssigen Verbund. Kombiniert man mindestens drei der Einzellager derart, dass die Mittelpunkte der Lager die Eckpunkte einer Fläche bilden, so erhält man eine stabile Gesamtlagerung in einer Ebene.

Die Oberfläche des oder der Magneten, aus der das Magnetfeld austritt, ist gleichzeitig die Lagerfläche und/oder die Gegenlagerfläche der Kugel des Lagers. Ebenso kann zwischen Magnet und Kugel eine Lauffläche aus abriebfestem Material angeordnet werden, welches magnetisch leitfähig bzw. durchdringbar ist. Die Magnete sind Permanentmagnete und/oder Elektromagnete.

Des Weiteren kann eine der Lagerflächen der Kugel eine sphärisch geformte Schale als Kugellager aufweisen.

In der Anwendung des erfindungsgemäßen magnetischen Lagers kann das Gegenlager der Kugel an einem Tragteil angeordnet sein, wobei bei einer Auslenkung des Tragteils relativ zur Lagerfläche des Magneten und einer daraus resultierenden Bewegung der Kugel aus ihrer Ruhelage heraus der Magnet bestrebt ist, die Kugel unter Mitnahme des Tragteils ins Zentrum der Kraftlinien des Magnetfeldes zurückzurollen.

Mehrere Einzellager, bestehend aus wenigstens einem Magneten mit wenigstens einer Lagerfläche, aus der ein Magnetfeld austritt oder in die ein solches eintritt, und auf der sich eine magnetisch leitfähige Kugel im Bereich des Magnetfeldes frei beweglich befindet, können übereinander angeordnet und miteinander magnetisch-kraftschlüssig verbunden sein. In vorteilhafter Ausgestaltung können auf diese Weise zwei Lagerhälften über mehrere Einzellager miteinander magnetisch-kraftschlüssig verbunden werden.

Der oder die Magnete mit Lagerfläche sind Teil einer Basis, wobei das die Gegenlagerfläche/n aufweisende Tragteil unter Zwischenlage der Kugel/n an einer Tischfläche angeordnet oder Teil einer Tischfläche ist. Die Tischfläche ist Teil eines Positionier- und Fördertischs mit einem Teller und mindestens einem elektrischen Antrieb, wie Elektromagnet oder Elektromotor, Piezoantrieb oder magnetostriktiver Antrieb, durch den der Teller in Bewegung versetzbar ist, wobei zwischen Teller und Positionier- und Fördertisch mindestens ein derartiges magnetisch-kraftschlüssig wirkendes Magnetlager ausgebildet ist.

Weitere Vorteile des erfindungsgemäßen Magnetlagers sind die Spielfreiheit der Lagerung, die hohe Steifigkeit des Lagers, die geringe Masse, der geringe Abstand vom zu lagernden Körper zum festen Bezugskörper, die selbsttätige Rückstellung des Lagers in Ausgangsposition, die Möglichkeit der zerstörungsfreie Trennung des Lagers sowie die Tatsache, dass keine Justierung notwendig ist.

Durch das Magnetlager kann des Weiteren ein Positionier- und Fördertisch mit einem Teller und mindestens einem elektrischen Antrieb, wie Elektromagnet oder Elektromotor, Piezoantrieb oder magnetostriktiver Antrieb, durch den der Teller in Bewegung versetzbar ist, aufgebaut werden, wobei zwischen Teller und Positionier- und Fördertisch mindestens ein magnetisches Zentrierlager gemäß Anspruch 1 oder Anspruch 2 ausgebildet ist.

Dieses Zentrierlager des Positionier- und Fördertisch weist unter dem Teller angeordnete, metallische Lagerkörper in Form von Kugeln oder Walzen, Lagerköpfen und Gegenlägern auf, wobei die Lagerkörper zwischen je einem der unter den Lagerkörpern angeordneten Lagerköpfen des Positionier- und Fördertisches und einem der an der Tellerunterseite angeordneten Gegenläger frei bewegbar angeordnet ist und dass wenigstens einer der Lagerköpfe und/oder Gegenläger ein Dauermagnet aus Magnetwerkstoff oder ein Elektromagnet ist, der eine ebene Stirnfläche aufweist, in die die magnetischen Feldlinien unter Durchdringung der metallischen Lagerkörper ein- bzw. austreten, wobei die Magnetkräfte bei Auslenken des bzw. der Lagerkörper aus einer magnetisch-stabilen Ruhelage heraus denselben bzw. dieselben wieder in die stabile Ruhelage zurückbewegen und Magnet und Lagerkörper eine magnetisch-kraftschlüssige Verbindung bilden.

Die Lagerköpfe sind auf einer parallel zum Teller ausgerichteten Lagerplatte angeordnet, wobei mindestens einer der magnetischen Lagerköpfe oder einer der magnetischen Gegenläger eine gegenüber den benachbarten Lagerköpfen unterschiedliche Polung besitzt.

Zur Auslenkung des Tellers in Bezug zum Positionier- und Fördertisch ist zwischen Teller und Positionier- und Fördertisch mindestens ein Führungslager angeordnet, welches aus unter dem Teller radial verteilten Schwinghebeln besteht, die jeweils drehfest auf der Rotationswelle eines Elektromotors angeordnet sind, welche die Schwenkachsen für die Schwinghebel bilden und wobei die Schwinghebel Mittel zur Aufnahme des Tellers besitzen, mit denen der Teller gegenüber den Schwinghebeln linear und quer zu den Rotationsachsen bewegbar und/oder drehbar ist.

Die Mittel der Schwinghebel des Positionier- und Fördertisches zur Aufnahme des Tisches sind Langlöcher, in denen von der Tellerunterseite ausragende Lagerzapfen eintauchen, wobei zwischen den Lagerzapfen und den Schwinghebeln quer zum jeweiligen Langloch ein Formschluß ausgebildet ist.

Die Antriebe, wie Elektromotoren, sind unterhalb der Lagerplatte angeordnet. Die Lagerplatte ruht auf Lagerstützen, die auf einer parallel zur Lagerplatte positionierten Fußplatte montiert sind.

Der Antrieb des Tisches erfolgt berührungslos durch ein oder mehrere mit dem Tisch verbundene Magnete oder magnetisch leitfähige Körper, auf die ein äußeres Magnetfeld einwirkt, welches durch jeweils einen oder mehrere mit dem Untergestell verbundene Elektromagnete erzeugt wird.

Ein Beispiel der Erfindung ist anhand der Beschreibung der Zeichnung eines Positionier- und Fördertisches gezeigt:
- Figur 1: eine perspektivische Darstellung eines Positionier- und Fördertisches von schräg oben mit Magnetlagern
- Figur 2: eine perspektivische Darstellung des Positionier- und Fördertisches von schräg unten mit Magnetlagern
- Figur 3: eine Seitenansicht des Positionier- und Fördertisches
- Figur 4: eine Draufsicht des Positionier- und Fördertisches ohne Teller
- Figur 5: eine Seitenansicht des Tellers und
- Figur 6: eine Ansicht der Unterseite des Tellers

Ein selbstzentrierendes Magnetlager, bestehend aus wenigstens einem Magneten mit wenigstens einer Lagerfläche, aus der ein Magnetfeld austritt oder in die ein solches eintritt, und auf der sich eine magnetisch leitfähige Kugel im Bereich des Magnetfeldes frei beweglich befindet, welches bestrebt ist, die Kugel in das Zentrum der Kraftlinien auf der Lagerfläche in einer Ruhelage zu zentrieren und Magnet und Kugel eine kraftschlüssige Verbindung bilden, wobei der Magnet bei Auslenkung der Kugel aus der Ruhelage bestrebt ist, die Kugel ins Zentrum der Kraftlinien des Magnetfeldes zurückzurollen, ist zum Beispiel Teil eines Positionier- und Fördertisch 1 mit einem Teller 16 und mindestens einem elektrischen Antrieb, wie Elektromagnet oder Elektromotor, Piezoantrieb oder magnetostriktiver Antrieb, durch den der Teller 16 in Bewegung versetzbar ist. Zwischen Teller 16 und Positionier- und Fördertisch 1 ist mindestens ein erfindungsgemäßes magnetisch-kraftschlüssiges Magnetlager ausgebildet, welches durch Magnetkraft aktivierbare Rückstellmittel besitzt und damit zur Zentrierung geeignet ist.

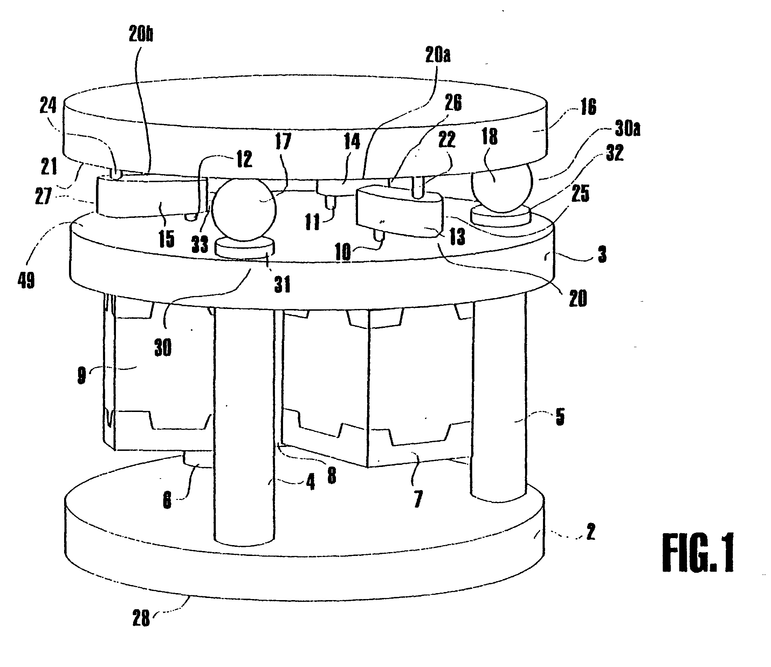

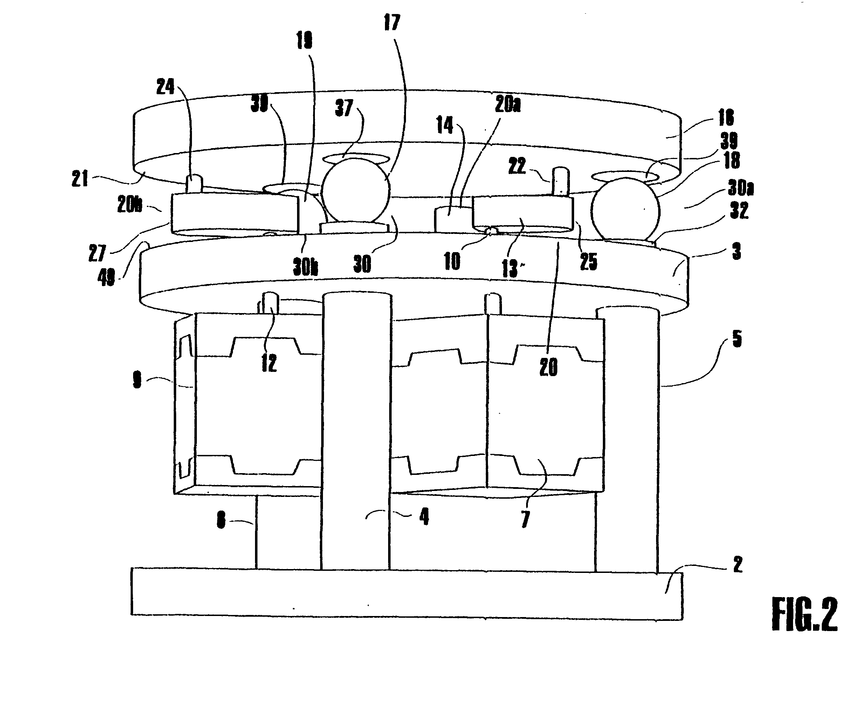

Der Positionier- und Fördertisch ist in den Figuren 1 und 2 in seiner Gesamtheit mit 1 bezeichnet. Zwischen einer unteren Fußplatte 2 und einer oberen Lagerplatte 3, die durch Lagerstützen 4,5,6 von einander distanziert sind, befinden sich drei Elektromotoren 7,8,9, deren Rotationsachsen 10,11,12 die Lagerplatte 3 durchsetzen und mit ihren freien Enden in jeweils einen Schwinghebel 13,14,15 eingreifen. Die freien Enden der Rotationsachsen 10,11,12 bilden somit zugleich die Schwenkachsen für die Schwinghebel 13,14,15.

Der Teller 16 sitzt auf den kugelförmigen Lagerkörpern 17,18,19 auf und ist in den Schwinghebeln 13,14,15 beweglich geführt. Der Teller 16 besitzt somit drei Führungsläger 20,20a,20b, die jeweils aus einem der Schwinghebel 13,14,15 und aus jeweils einem an der Tellerunterseite 21 angeordneten Lagerzapfen 22,23,24 gebildet ist, sowie drei Zentrierläger 30,30a,30b, bestehend aus jeweils einem der Lagerköpfe 31,32,33, je einem Lagerkörper 17,18,19 und dem jeweils zugeordneten Gegenläger 37,38,39.

Die Lagerzapfen 22,23,24 sind auf der einen Seite von den Schwinghebeln 13,14,15 in deren Längsrichtung verschieblich aufgenommen und auf ihrer anderen Seite fest mit dem Teller 16 verbunden.

Der Teller 16 besitzt keine feste Verbindung mit den Zentrierläger 30, 30a, 30b. Diese sind auf den Lagerköpfen 31,32,33 ruhende Lagerkörper 17, 18, 19 in Form von metallischen Kugeln und entsprechende, in der Tellerunterseite 21 angeordnete Gegenläger 37,38,39 in Gestalt von Magneten. Auch die Lagerköpfe 31,32,33 bestehen aus Magneten. Die Zentrierläger 30,30a,30b, die Lagerköpfe 31,32,33 und die Gegenläger 37,38,39 in Gestalt von Magneten bilden die durch die Magnetkraft der Magnete aktivierbaren Rückstellmittel.

Die jeweils gegenüberliegenden Magnete in Teller und Platte besitzen eine entgegengesetzte Polung und ziehen sich gegenseitig an. Im Betrieb schwenken die Schwinghebel 13,14,15 um ihre Achsen 10,11,12 und übertragen diese Bewegung auf den Teller 16, der mit seinen Lagerzapfen 22,23,24 zusätzlich innerhalb den Schwinghebeln 13,14,15 vom radial äußeren Rand 25,26,27 in Richtung der Schwenkachsen 10,11,12 verschieblich sind. Entsprechend der kontrollierten Elektromotorensteuerung kann von einer radialen Drehbewegung des Tellers 16 in eine ebenso kontrollierte lineare Bewegung in X-Y-Richtung umgestellt werden. Beim Abschalten der Elektromotoren 7,8,9 und beim Erreichen der Schwinghebeltotpunkte wird der Teller 16 punktgenau zentriert.

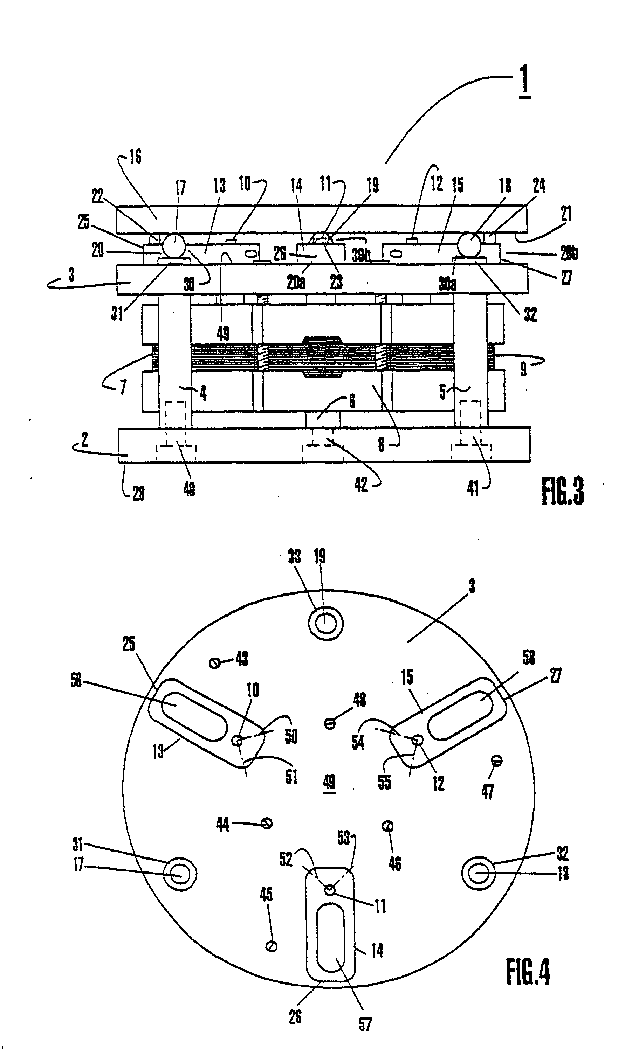

Wie hierzu die einzelnen Positionier- und Fördertischkomponenten ausgebildet sind, wird nachfolgend beschrieben. Wie die Figuren 3 und 4 zeigen, sind die Lagerstützen 4,5,6 von der Unterseite 28 der unteren Fußplatte 2 mit Schrauben 40,41,42 montiert und auf deren gegenüberliegenden Seiten die obere Lagerplatte 3 befestigt. Die Lagerstützen 4,5,6 sind auf einem Teilkreis der Platten 2,3 um 120° versetzt zueinander angeordnet. Um weitere 60° versetzt zu den Lagerstützen 4,5,6 sind ebenfalls in einer Kreisteilung von 120° die drei Elektromotoren 7,8,9 mit jeweils einem Schraubenpaar 43/44,45/46,47/48 unter der Lagerplatte 3 befestigt. In Verlängerung der Lagerstützenachsen ragen über die Oberkante 49 der Lagerplatte 3 die drei fest mit der Lagerplatte 3 verbundenen scheibenförmigen, kreiszylindrischen Lagerköpfe 31,32,33 hervor. Ferner treten die drei Rotationsachsen 10,11,12 der Elektromotoren 7,8,9 über die Oberkante 49 der Lagerplatte 3 aus. Auf jede Rotationsachse 10,11,12 ist ein Schwinghebel 13,14,15 drehfest mit jeweils zwei quer auf die Rotationsachsen 10,11,12 wirkenden Feststellschrauben 50/51,52/53,54/55 montiert.

Die Schwinghebel 13,14,15 sind an ihren Kanten abgerundete rechteckförmige Platten, die jeweils, sich horizontal zwischen Rotationsachse 10,11,12 und etwas von den äußeren Randseiten 25,26,27 eingerückt erstreckende Langlöcher 56,57,58 aufweisen. Die Schwinghebel 13,14,15 sind mit den Rotationsachsen 10,11,12 bzw. um deren Mittelachse schwenkbar.

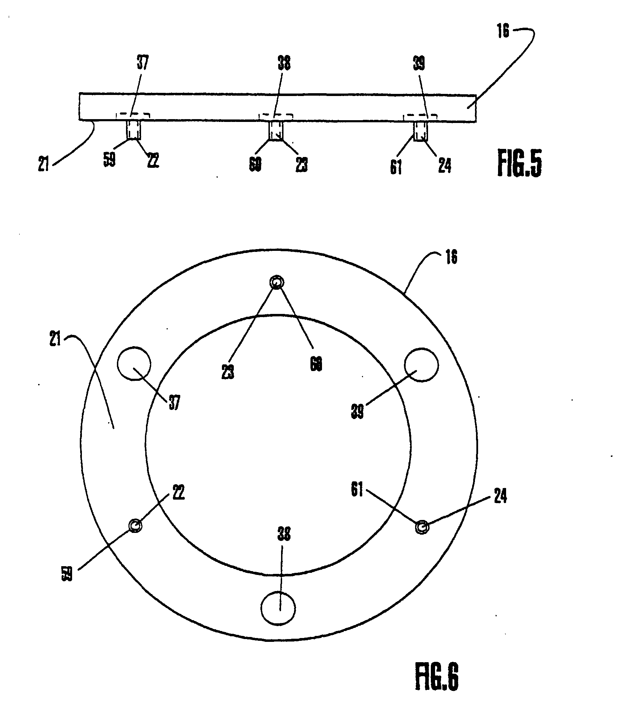

Der Teller 16 gemäß den Figuren 5 und 6 trägt auf seiner Unterseite 21 Lagerzapfen 22,23,24, auf die dem Innenmaß der Langlöcher 56,57,58 (Figur 3,4) angepaßte Führungshülsen 59,60,61 aufgesetzt sind. Die radiale Verteilung der Führungshülsen 59,60,61 bzw. der Lagerzapfen 22,23,24 beträgt 120°. Um 60° versetzt sind auf der Tellerunterseite 21 die Gegenläger 37,38,39 in Gestalt von Magneten eingesetzt, die mit den entsprechenden Lagerköpfen 31-33 aus Magnetwerkstoff auf der Lagerplatte 3 (Figur 1-4) korrespondieren. Bei der Anordnung von zwei negativ und einem positiv gepolten Magneten auf der oberen Platte 3 und zwei positiv und einem negativ gepolten Magneten auf der Tellerunterseite 21, kann eine Lagedefinition für den Teller 16 vorgegeben werden.

Durch die gegenseitige Einwirkung der sich gegenüberliegenden Magneten und den kugelförmigen Lagerkörpern 17,18,19 erfolgt stets dann eine Zwangszentrierung des Tellers 16, wenn die Magnetkraft die auf den Teller 16 wirkenden Antriebskräfte übersteigt.

### Gewerbliche Anwendbarkeit:

Die Erfindung ist zum Aufbau von magnetischen Lagern geeignet, insbesondere zur Herstellung und zum Einbau in Positionier- und Fördertische.

### Liste der Bezugszeichen:

- 1: Positionier- und Fördertisch
- 2: untere Fußplatte
- 3: obere Lagerplatte
- 4: Lagerstütze
- 5: Lagerstütze
- 6: Lagerstütze
- 7: Elektromotor
- 8: Elektromotor
- 9: Elektromotor
- 10: Rotationsachse von 7
- 11: Rotationsachse von 8
- 12: Rotationsachse von 9
- 13: Schwinghebel
- 14: Schwinghebel
- 15: Schwinghebel
- 16: Teller
- 17: Lagerkörper / Rückstellmittel
- 18: Lagerkörper / Rückstellmittel
- 19: Lagerkörper / Rückstellmittel
- 20: Führungslager
- 20a: Führungslager
- 20b: Führungslager
- 21: Tellerunterseite
- 22: Lagerzapfen
- 23: Lagerzapfen
- 24: Lagerzapfen
- 25: Außenrand von 13
- 26: Außenrand von 14
- 27: Außenrand von 15
- 28: Unterseite von 2
- 30: Zentrierlager
- 30a: Zentrierlager
- 30b: Zentrierlager
- 31: Lagerkopf / Rückstellmittel
- 32: Lagerkopf / Rückstellmittel
- 33: Lagerkopf / Rückstellmittel
- 37: Gegenlager / Rückstellmittel
- 38: Gegenlager / Rückstellmittel
- 39: Gegenlager / Rückstellmittel
- 40: Schraube
- 41: Schraube
- 42: Schraube
- 43: Schraube
- 44: Schraube
- 45: Schraube
- 46: Schraube
- 47: Schraube
- 48: Schraube
- 49: Oberkante von 3
- 50: Feststellschraube
- 51: Feststellschraube
- 52: Feststellschraube
- 53: Feststellschraube
- 54: Feststellschraube
- 55: Feststellschraube
- 56: Langloch
- 57: Langloch
- 58: Langloch
- 59: Führungshülse
- 60: Führungshülse
- 61: Führungshülse

## Patentansprüche

1. Selbstzentrierendes Magnetlager, bestehend aus wenigstens einem Magneten mit wenigstens einer Lagerfläche, aus der ein Magnetfeld austritt oder in die ein solches eintritt, und auf der sich eine magnetisch leitfähige Kugel (17,18,19) im Bereich des Magnetfeldes frei beweglich befindet, welches bestrebt ist, die Kugel (17,18,19) in das Zentrum der Kraftlinien auf der Lagerfläche in einer Ruhelage zu zentrieren und Magnet und Kugel (17,18, 19) eine magnetisch-kraftschlüssige Verbindung bilden, wobei der Magnet bei Auslenkung der Kugel (17,18,19) aus der Ruhelage bestrebt ist, die Kugel (17, 18,19) ins Zentrum der Kraftlinien des Magnetfeldes zurückzurollen.

2. Magnetlager nach Anspruch 1,
**dadurch gekennzeichnet, dass** das Magnetlager ein Gegenlager (37, 38, 39) aufweist, welches ebenfalls ein Magnet mit einer Gegenlagerfläche ist, aus der ein Magnetfeld austritt oder in die ein solches eintritt, wobei die Magnete so gepolt sind, dass sie sich anziehen und beide Magnete bei Auslenkung der Kugel (17, 18, 19) aus der Ruhelage bestrebt sind, die dazwischen befindliche Kugel (17, 18, 19) in das jeweilige Zentrum der Kraftlinien der Magnetfelder auf der Lagerfläche und der Gegenlagerfläche zurückzurollen, so dass beide Magnete mit der dazwischen angeordneten Kugel (17, 18, 19) eine magnetisch-kraftschlüssige Verbindung bilden.

3. Magnetlager nach Anspruch 1 oder 2, **dadurch gekennzeichnet,**
**dass** die Oberfläche des oder der Magneten, aus der das Magnetfeld austritt, gleichzeitig die Lagerfläche und/oder die Gegenlagerfläche der Kugel (17,18, 19) ist.

4. Magnetlager nach einem der vorherigen Ansprüche,
**dadurch gekennzeichnet, dass** die Magnete Permanentmagnete und/oder Elektromagnete sind.

5. Magnetlager nach einem der vorherigen Ansprüche,
**dadurch gekennzeichnet, dass** eine der Lagerflächen der Kugel (17, 18, 19) eine sphärisch geformte Schale als Kugellager ist.

6. Magnetlager nach einem der vorherigen Ansprüche,
**dadurch gekennzeichnet, dass** das Gegenlager (37, 38, 39) der Kugel (17, 18, 19) an einem Tragteil angeordnet ist, und bei einer Auslenkung des Tragteils relativ zur Lagerfläche des Magneten und einer daraus resultierenden Bewegung der Kugel aus ihrer Ruhelage heraus der Magnet bestrebt ist, die Kugel (17, 18, 19) unter Mitnahme des Tragteils ins Zentrum der Kraftlinien des Magnetfeldes zurückzurollen.

7. Magnetlager nach einem der vorherigen Ansprüche,
**dadurch gekennzeichnet, dass** mehrere Einzellager, bestehend aus wenigstens einem Magneten mit wenigstens einer Lagerfläche, aus der ein Magnetfeld austritt oder in die ein solches eintritt, und auf der sich eine magnetisch leitfähige Kugel (17, 18, 19) im Bereich des Magnetfeldes frei beweglich befindet, übereinander angeordnet und miteinander magnetisch-kraftschlüssig verbunden sind.

8. Magnetlager nach Anspruch 7,
**dadurch gekennzeichnet, dass** zwei Lagerhälften über mehrere Einzellager miteinander magnetisch-kraftschlüssig verbunden sind.

9. Magnetlager nach einem der vorherigen Ansprüche,
**dadurch gekennzeichnet, dass** zwischen Magnet und Kugel (17,18,19) eine Lauffläche aus abriebfestem Material angeordnet ist, welches magnetisch leitfähig ist.

10. Magnetlager nach einem der vorherigen Ansprüche,
**dadurch gekennzeichnet, dass** der oder die Magnete mit Lagerfläche Teil einer Basis sind und dass das die Gegenlagerfläche/n aufweisende Tragteil unter Zwischenlage der Kugel/n (17,18,19) an einer Tischfläche (16) angeordnet oder Teil einer Tischfläche (16) ist.

11. Positionier- und Fördertisch (1) mit mit einem Teller (16) als Tischfläche sowie mit mindestens einem elektrischen Antrieb, wie Elektromagnet oder Elektromotor, Piezoantrieb oder magnetostriktiver Antrieb, durch den der Teller (16) in Bewegung versetzbar ist, wobei zwischen Teller (16) und Positionier- und Fördertisch (1) mindestens ein selbstzentrierendes Magnetlager (30,30a30b) angeordnet ist, bestehend aus wenigstens einem Magneten mit wenigstens einer Lagerfläche, aus der ein Magnetfeld austritt oder in die ein solches eintritt, und auf der sich eine magnetisch leitfähige Kugel (17, 18, 19) im Bereich des Magnetfeldes frei beweglich befindet, welches bestrebt ist, die Kugel in das Zentrum der Kraftlinien auf der Lagerfläche in einer Ruhelage zu zentrieren und Magnet und Kugel (17, 18, 19) eine magnetisch-kraftschlüssige Verbindung bilden, wobei der Magnet bei Auslenkung der Kugel (17,18,19) aus der Ruhelage bestrebt ist, die Kugel (17, 18, 19) ins Zentrum der Kraftlinien des Magnetfeldes zurückzurollen.

12. Positionier- und Fördertisch (1) nach Anspruch 11,
**dadurch gekennzeichnet, dass** das Zentrierlager (30,30a30b) unter dem Teller (16) angeordnete, metallische Lagerkörper (17,18,19) in Form von Kugeln oder Walzen, Lagerköpfen (31,32,33) und Gegenlägern (37,38,39) aufweist, wobei die Lagerkörper (17,18,19) zwischen je einem der unter den Lagerkörpern (17,18,19) angeordneten Lagerköpfen (31,32,33) des Positionier- und Fördertisches (1) und einem der an der Tellerunterseite (21) angeordneten Gegenläger (37,38,39) frei bewegbar angeordnet ist und dass wenigstens einer der Lagerköpfe und/oder Gegenläger ein Dauermagnet aus Magnetwerkstoff oder ein Elektromagnet ist, der eine ebene Stirnfläche aufweist, in die die magnetischen Feldlinien unter Durchdringung der metallischen Lagerkörper (17,18,19) ein- bzw. austreten, wobei die Magnetkräfte bei Auslenken des bzw. der Lagerkörper (17,18,19) aus einer magnetisch-stabilen Ruhelage heraus denselben bzw. dieselben wieder in die stabile Ruhelage zurückbewegen und Magnet und Lagerkörper eine magnetisch-kraftschlüssige Verbindung bilden.

13. Positionier- und Fördertisch (1) nach Anspruch 11 oder 12,
**dadurch gekennzeichnet, dass** die Lagerköpfe (31,32,33) auf einer parallel zum Teller (16) ausgerichteten Lagerplatte (3) angeordnet sind, wobei mindestens einer der magnetischen Lagerköpfe (31,32,33) oder einer der magnetischen Gegenläger (37,38,39) eine gegenüber den benachbarten Lagerköpfen unterschiedliche Polung besitzt.

14. Positionier- und Fördertisch (1) nach einem der Ansprüche 11 bis 13,
**dadurch gekennzeichnet, dass** zur Auslenkung des Tellers (16) in Bezug zum Positionier- und Fördertisch (1) zwischen Teller (16) und Positionier- und Fördertisch (1) mindestens ein Führungslager (20,20a,20b) angeordnet ist, welches aus unter dem Teller (16) radial verteilten Schwinghebeln (13,14,15) besteht, die jeweils drehfest auf der Rotationswelle (10,11,12) eines Elektromotors (7,8,9) angeordnet sind, welche die Schwenkachsen für die Schwinghebel (13,14,15) bilden und wobei die Schwinghebel (13,14,15) Mittel zur Aufnahme des Tellers (16) besitzen, mit denen der Teller (16) gegenüber den Schwinghebeln (13,14,15) linear und quer zu den Rotationsachsen (10,11,12) bewegbar und/oder drehbar ist.

15. Positionier- und Fördertisch nach Anspruch 14,
**dadurch gekennzeichnet, daß** die Mittel der Schwinghebel (13,14,15) zur Aufnahme des Tisches (16) Langlöcher (56,57,58) sind, in denen von der Tellerunterseite (21) ausragende Lagerzapfen (22,23,24) eintauchen, wobei zwischen den Lagerzapfen (22,23,24) und den Schwinghebeln (13,14,15) quer zum jeweiligen Langloch (56,57,58) ein Formschluß ausgebildet ist.

16. Positionier- und Fördertisch nach einem der Ansprüche 11 bis 15,
**dadurch gekennzeichnet, daß** die Antriebe, wie Elektromotoren (7,8,9), unterhalb der Lagerplatte (3) angeordnet sind.

17. Positionier- und Fördertisch nach einem der Ansprüche 11 bis 16,
**dadurch gekennzeichnet, daß** die Lagerplatte (3) auf Lagerstützen (4,5,6) ruht, die auf einer parallel zur Lagerplatte (3) positionierten Fußplatte montiert sind.

18. Positionier- und Fördertisch nach einem der Ansprüche 11 bis 17,
**dadurch gekennzeichnet, daß** der Antrieb des Tisches berührungslos durch ein oder mehrere mit dem Tisch verbundene Magnete oder magnetisch leitfähige Körper erfolgt, auf die ein äußeres Magnetfeld einwirkt, welches durch jeweils einen oder mehrere mit dem Untergestell verbundene Elektromagnete erzeugt wird.

## Claims

1. A self-centering magnetic bearing, consisting of at least one magnet with at least one bearing surface from which a magnetic field exits or into which such a magnetic field enters, and on which there is a magnetically conductive ball (17, 18, 19) situated so as to be freely movable in the area of the magnetic field that strives to center the ball (17, 18, 19) in the center of the force lines on the bearing surface in a resting position, and the magnet and the ball (17, 18, 19) form a magnetic-positive connection, whereby, when the ball (17, 18, 19) deflects out of the resting position, the magnet strives to roll the ball (17, 18, 19) back into the center of the force lines of the magnetic field.

2. The magnetic bearing according to Claim 1,
**characterized in that** the magnetic bearing has a counter-bearing (37, 38, 39) which is likewise a magnet with a counter-bearing surface from which a magnetic field exits or into which such a magnetic field enters, whereby the polarity of the magnets is such that they attract each other and, when the ball (17, 18, 19) deflects out of the resting position, both magnets strive to roll the ball (17, 18, 19) that is between them into the respective center of the force lines of the magnetic field on the bearing surface and on the counter-bearing surface, so that both magnets form a magnetic-positive connection with the ball (17, 18, 19) that is between said magnets.

3. The magnetic bearing according to Claim 1 or 2, **characterized in that** the surface of the magnet(s) from which the magnetic field exits is, at the same time, the bearing surface and/or the counter-bearing surface of the ball (17, 18, 19).

4. The magnetic bearing according to one of the preceding claims,
**characterized in that** the magnets are permanent magnets and/or electromagnets.

5. The magnetic bearing according to one of the preceding claims,
**characterized in that** one of the bearing surfaces of the ball (17, 18, 19) is a spherically shaped dish as a ball bearing.

6. The magnetic bearing according to one of the preceding claims,
**characterized in that** the counter-bearing (37, 38, 39) of the ball (17, 18, 19) is arranged on a support element and, when the support element is deflected relative to the bearing surface of the magnet and when, as a result, the ball moves out of its resting position, the magnet strives to roll the ball (17, 18, 19), while carrying along the support element, back into the center of the force lines of the magnetic field.

7. The magnetic bearing according to one of the preceding claims,
**characterized in that** several individual bearings, consisting of at least one magnet with at least one bearing surface from which a magnetic field exits or into which such a magnetic field enters and on which there is a magnetically conductive ball (17, 18, 19) situated so as to be freely movable in the area of the magnetic field, are arranged one above the other and are connected to each other by means of a magnetic-positive connection.

8. The magnetic bearing according to Claim 7,
**characterized in that** two bearing halves are connected to each other via several individual bearings by means of a magnetic-positive connection.

9. The magnetic bearing according to one of the preceding claims,
**characterized in that**, between the magnet and the ball (17, 18, 19), there is a running surface made of abrasion-resistant material that is magnetically conductive.

10. The magnetic bearing according to one of the preceding claims,
**characterized in that** the magnet(s) with its/their bearing surface(s) is/are part of a base and **in that** the support element having the counter-bearing surface(s) is arranged on a table surface (16) with the ball(s) (17, 18, 19) positioned in between or else it is part of a table surface (16).

11. A positioning and conveying table (1) with a plate (16) as the table surface as well as with at least one electric drive such as an electromagnet or electric motor, piezo drive or magnetostrictive drive by means of which the plate (16) can be put into motion, whereby between the plate (16) and the positioning and conveying table (1 ), there is at least one self-centering magnetic bearing (30, 30a, 30b), consisting of at least one magnet with at least one bearing surface from which a magnetic field exits or into which such a magnetic field enters, and on which there is a magnetically conductive ball (17, 18, 19) situated so as to be freely movable in the area of the magnetic field that strives to center the ball (17, 18, 19) in the center of the force lines on the bearing surface in a resting position, and the magnet and the ball (17, 18, 19) form a magnetic-positive connection, whereby, when the ball (17, 18, 19) deflects out of the resting position, the magnet strives to roll the ball (17, 18, 19) back into the center of the force lines of the magnetic field.

12. The positioning and conveying table (1) according to Claim 11,
**characterized in that**, under the plate (16), the centering bearing (30, 30a, 30b) has metallic bearing bodies (17, 18, 19) in the form of balls or rollers, as well as bearing heads (31, 32, 33) and counter-bearings (37, 38, 39), whereby the bearing bodies (17, 18, 19) are each arranged between one of the bearing heads (31, 32, 33) of the positioning and conveying table (1) - that are arranged under the bearing bodies (17, 18, 19) - and one of the counter-bearings (37, 38, 39) - that are arranged on the bottom of the plate (21) - so as to be freely movable, and **in that** at least one of the bearing heads and/or counter-bearings is a permanent magnet made of magnetic material or it is an electromagnet that has a smooth end surface into which the magnetic field lines enter or exit while penetrating the metallic bearing bodies (17, 18, 19), whereby, when the bearing body or bodies (17, 18, 19) deflect out of a magnetically stable resting position, the magnetic forces move said bearing body or bodies (17, 18, 19) back into the stable resting position, and the magnet and the bearing body form a magnetic-positive connection.

13. The positioning and conveying table (1) according to Claim 11 or 12,
**characterized in that** the bearing heads (31, 32, 33) are arranged on a bearing plate (3) that is aligned parallel to the plate (16), whereby at least one of the magnetic bearing heads (31, 32, 33) or one of the magnetic counter-bearings (37, 38, 39) has a polarity that differs from the adjacent bearing heads.

14. The positioning and conveying table (1) according to one of Claims 11 to 13, **characterized in that**,
in order to deflect the plate (16) relative to the positioning and conveying table (1), there is at least one guide bearing (20, 20a, 20b) arranged between the plate (16) and the positioning and conveying table (1), said guide bearing (20, 20a, 20b) consisting of rocking levers (13, 14, 15) that are distributed radially under the plate (16) and that are arranged non-rotatably on the axis of rotation (10, 11, 12) of an electric motor (7, 8, 9) and that form the pivoting axes for the rocking levers (13, 14, 15) and whereby the rocking levers (13, 14, 15) have means to receive the plate (16) with which the plate (16) can be moved and/or rotated linearly with respect to the rocking levers (13, 14, 15) and transversely to the axes of rotation (10, 11, 12).

15. The positioning and conveying table according to Claim 14,
**characterized in that** the means of the rocking levers (13, 14, 15) that serve to receive the table (16) are elongated holes (56, 57, 58) into which journal pins (22, 23, 24) protruding from the bottom of the plate (21) are inserted, whereby a positive fit is created between the journal pins (22, 23, 24) and the rocking levers (13, 14, 15) transversely to each elongated hole (56, 57, 58).

16. The positioning and conveying table according to one of Claims 11 to 15,
**characterized in that** the drives such as electric motors (7, 8, 9) are arranged underneath the bearing plate (3).

17. The positioning and conveying table according to one of Claims 11 to 16,
**characterized in that** the bearing plate (3) rests on bearing supports (4, 5, 6) that are mounted on a footplate positioned parallel to the bearing plate (3).

18. The positioning and conveying table according to one of Claims 11 to 17,
**characterized in that** the table is driven contact-free by means of one or more magnets or magnetically conductive bodies that are connected to the table and that are exposed to an external magnetic field which is generated by one or more electromagnets connected to the lower frame.

## Revendications

1. Palier magnétique à centrage automatique comprenant au moins un aimant avec au moins une surface de palier dont sort ou dans laquelle entre un champ magnétique et sur laquelle se trouve une bille magnétoconductrice (17,18,19) pouvant se déplacer librement dans la zone du champ magnétique qui s'efforce de centrer la bille (17,18,19) dans une position de repos au centre des lignes de force sur la surface de palier, l'aimant et la bille (17,18,19) formant une liaison par adhérence magnétique, et l'aimant s'efforçant, dès que la bille (17,18,19) s'éloigne de sa position de repos, de la ramener au centre des lignes de force du champ magnétique.

2. Palier magnétique selon la revendication 1, **caractérisé en ce que** le palier magnétique présente un contre-palier (37,38,39) qui est lui aussi un aimant doté d'une surface de contre-palier dont sort ou dans laquelle entre un champ magnétique, les aimants étant polarisés de façon à ce qu'ils s'attirent et les deux aimants s'efforçant, dès que la bille (17,18,19) s'éloigne de sa position de repos, de ramener la bille (17,18,19) se trouvant entre eux, au centre respectif des lignes de force des champs magnétiques sur la surface de palier et la surface de contre-palier, si bien que les deux aimants avec la bille (17,18,19) disposée entre eux, forment une liaison par adhérence magnétique.

3. Palier magnétique selon la revendication 1 ou 2, **caractérisé en ce que** la surface de l'aimant ou des aimants dont sort le champ magnétique est en même temps la surface de palier et/ou la surface de contre-palier de la bille (17,18,19).

4. Palier magnétique selon l'une des revendications précédentes,
**caractérisé en ce que** les aimants sont des aimants permanents et/ou des électroaimants.

5. Palier magnétique selon l'une des revendications précédentes,
**caractérisé en ce que** l'une des surfaces de palier de la bille (17,18,19) est une coquille sphérique faisant office de roulement.

6. Palier magnétique selon l'une des revendications précédentes,
**caractérisé en ce que** le contre-palier (37, 38, 39) de la bille (17,18,19) est disposé sur un élément porteur et que, lorsque l'élément porteur se déplace par rapport à la surface de palier de l'aimant ce qui a pour conséquence que la bille s'éloigne de sa position de repos, l'aimant cherche à ramener la bille (17,18,19) au centre des lignes de force du champ magnétique en entraînant l'élément porteur.

7. Palier magnétique selon l'une des revendications précédentes,
**caractérisé en ce que** plusieurs paliers individuels, comprenant au moins un aimant avec au moins une surface de palier dont sort ou dans laquelle entre un champ magnétique et sur laquelle se trouve une bille magnétoconductrice (17,18,19) pouvant se déplacer librement dans la zone du champ magnétique, sont disposés l'un par-dessus l'autre et reliés entre eux par adhérence magnétique.

8. Palier magnétique selon la revendication 7, **caractérisé en ce que** deux moitiés de palier sont reliées l'une à l'autre par adhérence magnétique via plusieurs paliers individuels.

9. Palier magnétique selon l'une des revendications précédentes,
**caractérisé en ce que** une surface de roulement en matériau magnétoconducteur et résistant à l'abrasion est disposée entre l'aimant et la bille (17, 18, 19).

10. Palier magnétique selon l'une des revendications précédentes,
**caractérisé en ce que** l'aimant ou les aimants avec la surface de palier font partie d'une base et que l'élément porteur présentant la/les surface/s de contre-palier est disposé sur une surface de table (16) ou fait partie d'une surface de table (16), la/les bille/s (17, 18, 19) étant interposée/s.

11. Table de positionnement et de transport (1) avec un plateau (16) comme surface de table et comportant au moins une commande électrique telle qu'un électroaimant ou électromoteur, piézomoteur ou commande magnétostrictive, pouvant mettre en mouvement le plateau (16), au moins un palier magnétique (30,30a,30b) autocentreur étant disposé entre le plateau (16) et la table de positionnement et de transport (1) et comprenant au moins un aimant avec au moins une surface de palier dont sort ou dans laquelle entre un champ magnétique et sur laquelle se trouve une bille magnétoconductrice (17,18,19) pouvant se déplacer librement dans la zone du champ magnétique qui s'efforce de centrer la bille (17,18,19) dans une position de repos au centre des lignes de force sur la surface de palier, l'aimant et la bille (17,18,19) formant une liaison par adhérence magnétique, et l'aimant s'efforçant, dès que la bille (17,18,19) s'éloigne de sa position de repos, de la ramener au centre des lignes de force du champ magnétique.

12. Table de positionnement et de transport (1) selon la revendication 11,
**caractérisée en ce que** le palier de centrage (20, 30a, 30b) présente des corps de palier métalliques (17,18,19) sous forme de billes ou de rouleaux, de têtes de palier (31,32,33) et de contre-paliers (37,38,39), disposés en dessous du plateau (16), lesdits corps de palier (17,18,19) étant disposés chacun de façon mobile entre l'une des têtes de palier (31,32,33) de la table de positionnement et de transport (1) disposées en dessous des corps de palier (17,18,19) et l'un des contre-paliers (37, 38, 39) disposés sur la face inférieure du plateau (21), et que au moins l'une des têtes de palier et/ou des contre-paliers est un aimant permanent en un matériau magnétique ou un électroaimant présentant une face frontale plane dans laquelle entrent ou dont sortent les lignes de champ magnétiques en pénétrant les corps de palier métalliques (17,18,19), les forces magnétiques, dès que le ou les corps de palier (17, 18, 19) se déplace/nt en quittant leur position de repos magnétiquement stable, le/les ramenant dans la position de repos stable et l'aimant et le/les corps de palier formant une liaison par adhérence magnétique.

13. Table de positionnement et de transport (1) selon la revendication 11 ou 12, **caractérisée en ce que**
les têtes de palier (31,32,33) sont disposées sur une plaque de palier (3) orientée parallèlement au plateau (16), au moins l'une des têtes de paliers magnétiques (31,32,33) ou l'un des contre-paliers magnétiques (37,38,39) possédant une polarité opposée à celle des têtes de palier voisines.

14. Table de positionnement et de transport (1) selon l'une des revendications 11 à 13, **caractérisée en ce que**
pour permettre le déplacement du plateau (16) par rapport à la table de positionnement et de transport (1), au moins un palier de guidage (20,20a,20b) est disposé entre le plateau (16) et la table de positionnement et de transport (1), lequel consiste en leviers oscillants (13,14,15) répartis radialement en dessous du plateau (16) et disposés de façon à ne pas pouvoir tourner sur l'arbre de rotation (10,11,12) d'un électromoteur (7,8,9), qui forment les axes de pivotement des leviers oscillants (13,14,15), lesdits leviers oscillants (13,14,15) possédant des moyens destinés à la réception du plateau (16) à l'aide desquels le plateau (16) peut se déplacer et/ou effectuer des mouvements rotatifs par rapport aux leviers oscillants (13,14,15), linéairement et transversalement aux axes de rotation (10,11,12).

15. Table de positionnement et de transport selon la revendication 14,
**caractérisée en ce que** les moyens des leviers oscillants (13,14,15) destinés à la réception du plateau (16) sont des trous oblongs (56,57,58), dans lesquels s'enfoncent des tourillons (22,23,24) qui font saillie de la face inférieure du plateau (21), une liaison mécanique étant conformée entre les tourillons (22,23,24) et les leviers oscillants (13,14,15) transversalement au trou oblong respectif (56,57,58).

16. Table de positionnement et de transport selon l'une des revendications 11 à 15, **caractérisée en ce que**
les commandes, telles que des électromoteurs (7,8,9), sont disposées en dessous de la plaque de support (3).

17. Table de positionnement et de transport selon l'une des revendications 11 à 16, **caractérisée en ce que** la plaque de support (3) repose sur des appuis (4,5,6) montés sur une plaque de base positionnée parallèlement à la plaque de support (3).

18. Table de positionnement et de transport selon l'une des revendications 11 à 17, **caractérisée en ce que**
la commande de la table s'effectue sans contact au moyen d'un ou plusieurs aimants ou corps magnétoconducteurs reliés à la table et sur lesquels agit un champ magnétique extérieur engendré par un ou plusieurs électroaimants raccordés au châssis de support.
